# EUROPEAN PATENT SPECIFICATION

(11) **EP 0 964 579 B1**
(45) Date of publication and mention of the grant of the patent: **06.05.2004**
(21) Application number: 98110533.1
(22) Date of filing: 09.06.1998
(51) Int. Cl.: H04N 7/18

(54) **Door camera unit having a video memory**
Türkameraeinheit mit Bildspeicher
Interphone audiovisuel avec une mémoire vidéo

(43) Date of publication of application: 15.12.1999
(73) Proprietor: Niles Parts Co., Ltd., Tokyo 143 (JP)
(72) Inventor: Nakamura, Hiroshi, Ota-ku, Tokyo 143 (JP)
(74) Representative: Luderschmidt, Schüler & Partner GbR

(56) References cited:
- EP-A- 0 664 649
- GB-A- 2 286 283

## Description

### FIELD OF THE INVENTION

The present invention relates to an improvement of a door camera unit for imaging visitors, etc., set so as to direct an imaging direction to an neighborhood of an entrance of a building.

### DESCRIPTION OF THE PRIOR ART

As this kind of prior art techniques there are known television interphones disclosed in JP-A-Hei 5-308638. By these prior art techniques visitors, etc. are imaged by means of a television camera, whose video signals are taken-in by a monitor television to be displayed. A whole device is so constructed that there are disposed A/D converting means, a video memory, signal processing means and D/A converting means on signal lines connecting the monitor television with the television camera; that the video signals from the television camera are converted into digital data by means of the A/D converting means and digital video data are stored temporarily in the video memory, that thereafter they are subjected to video distortion correction by means of the signal processing means and enlarging processing and converted again to analogue signals by means of the D/A converting means; and that finally they are inputted to the monitor television.

However, the video memory according to the prior art is a device for storing strictly temporarily video data in order to subject them to video distortion correction, enlarging processing, etc. and it is not constructed so as to have a function accompanying a concept such as recording or conservation. For this reason, according to the prior art techniques, it was not possible to image doubtful visitors, etc. and to leave video images thereof for the sake of security, i.e. safety. In a general security system video images are recorded by means of a video recorder. In case where they are recorded by means of a video recorder, since originally unnecessary video images are also recorded, not only a lot of time is required when searching a necessary video image, but also it is not possible to assemble the door camera unit and the recording means in one body in a compact manner.

GB-A-2 286 283 describes a recording apparatus comprising a camera as well as a motion detector which may be a video image discriminating means or an infrared sensor. If the motion detector detects a moving object, a pre-recorded message is output and an image of the object is recorded.

EP-A-0 664 649 discloses an image memory system comprising a TV camera and a push button which may be a chime switch. If the button is pushed, the image memory system starts recording.

### SUMMARY OF THE INVENTION

The present invention has been made in order to solve the above problem and an object thereof is to provide a door camera unit provided with recording means, which includes a video memory, in which only necessary video images are automatically recorded.

In order to solve the above problem, according to the present invention, a door camera unit, whose imaging direction is directed to a neighborhood of an entrance of a building, having a video memory, is provided, in which an information inputting section is connected with the door camera unit, which section outputs information signals for judging whether video images should be recorded or not, and the door camera unit comprises further the video memory for recording, every time an information signal inputted from the information inputting section to the door camera unit meets video image recording execution conditions.

In the invention described above the information inputting section includes a chime switch operated by a visitor and a human body detecting sensor detecting access of the visitor and an image may be recorded in the video memory, unless an operation signal is inputted from the chime switch in a predetermined period of time after a detection signal has been inputted from the human body detecting sensor. Therefore, a video image of a person regarded as doubtful can be recorded automatically. It is advantageous that only necessary video can be recorded automatically and video images can be searched in a short time. Further it is advantageous, in case where the door camera unit and recording means are assembled in one body in a compact manner.

### BRIEF DESCRIPTION OF THE DRAWINGS

Fig. 1 is an electric block diagram showing an embodiment of the present invention; and
Fig. 2 is an electric block diagram showing a modified example thereof.

### DESCRIPTION OF THE PREFERRED EMBODIMENTS

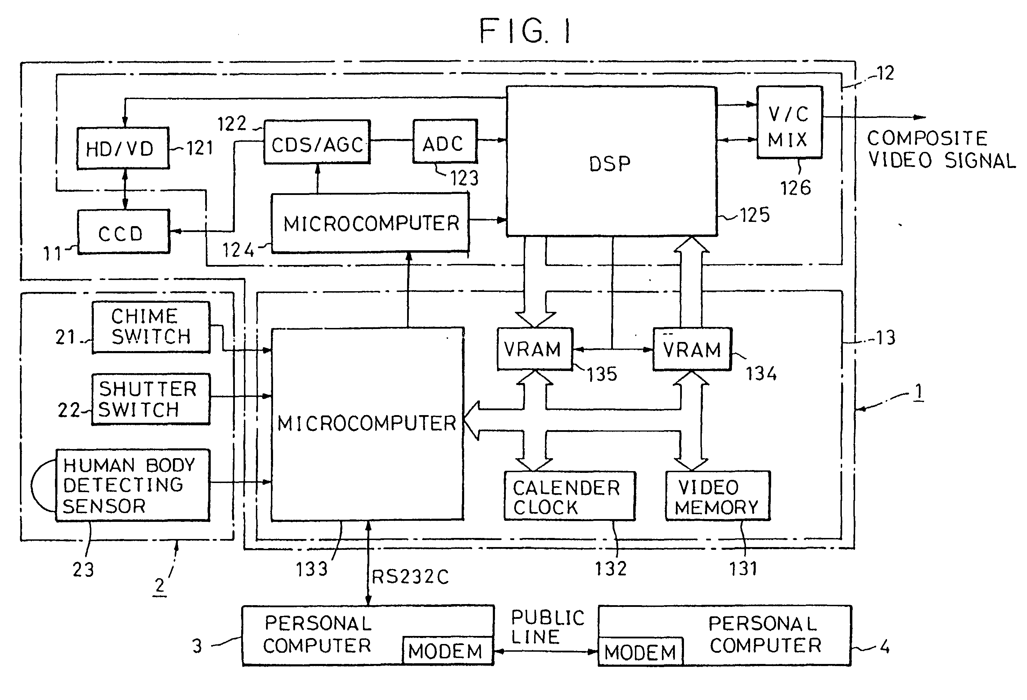

Hereinbelow an embodiment of the present invention will be explained, referring to Fig. 1, in which reference numeral 1 is a door camera unit, 2 is an information inputting section; 3 and 4 are personal computers.

At first the door camera unit 1 will be explained. The door camera unit 1 is one incorporating a CCD camera section 11, an image processing section 12, and a memory processing section 13. The CCD camera section 11 is set so that its imaging direction is directed to a neighborhood of an entrance of a building.

The image processing section 12 is one, which processes video signals outputted by the CCD camera section 11 and is composed of a HD/VD (Horizontal Drive/Vertical Drive) circuit 121, a CDS/AGC (Correlated Double Sampling/Auto Gain Control) circuit 122, an ADC (Analogue Digital Convertor) circuit 123, a microcomputer circuit 124, a DSP (Digital Signal Processor) circuit 125, and a Y/C Mix circuit 126.

The HD/VD circuit 121 inputs horizontal synchronizing signals and vertical synchronizing signals to the CCD camera section 11. The CDS/AGC circuit 122, takes-out a smoothly varying continuous signal from signals outputted by the CCD camera section 11 to effect gain regulation and forms brightness (Y) signals and color (R,G,B) signals to output them, while outputting diaphragm regulating signals for the CCD camera section 11. Speaking more in detail, the CCD camera section 11 outputs alternately a noise component and a signal component superposed thereon, which causes worsening the S/N ratio. The CDS/AGC circuit 122 cramps noise components among signals outputted by the CCD camera section 11 at a predetermined voltage to remove low frequency noises and at the same time forms a continuous signal, from which noise components are removed by sample-holding signal components.

Further the ADC circuit 123 converts analogue video signals outputted by the CDS/AGC circuit 122 into digital video signals. The microcomputer circuit 124 controls the CDS/AGC circuit 122, the DSP circuit 125, etc., for which e.g. a 8-bit microcomputer, etc. are adopted. The DSP circuit 125 is processes brightness (Y) signals color (R,G,B) signals, white balance signals, etc. in the video signals in a digital manner. The Y/C Mix circuit 126 is one for mixing the luminance (Y) signals and chrominance (C) signals.

Now the memory processing section 13 will be explained. This memory processing section 13 is connected to the information inputting section 2 to store images, depending on the information signal inputted from the information inputting section 2 and composed of a video memory 131, a calendar clock 132, a microcomputer 133 and VRAM 134, 135.

The video memory 131 reads video data of one frame from the image processing section 12 to store them for every access from the microcomputer 133 and for which e.g. flash memory elements are adopted to construct a large capacity type non-volatile memory having a memory capacity of about 1M x 16 bits. It is preferable to delete oldest video data, e.g. every time new video data should be recorded, in case where the video memory 131 is full of recorded data. The calendar clock 132 generates data as to the date and the time when the video data are recorded in the video memory 131. For example, that superimposes these data and time on the video data recorded in the video memory 131.

Further the microcomputer circuit 133 controls the video memory 131, the calendar clock 132 and the VRAM 134, 135, for which e.g. a 32-bit RISC microcomputer, etc. are adopted. The VRAM 134 and 135, stores temporarily these video data, when the video data are read-in from the video processing section 12 or when the video data recorded in the video memory 131 are read-out to the video processing section 12, for each of which a VRAM (Video Random Access Memory) having a memory capacity of about 256K x 16 bits is adopted.

Next the information inputting section 2 will be explained. The information inputting section 2 outputs information signals used by the microcomputer 133 in the memory processing section 13 for judging whether the video signal should be recorded or not and has a chime switch 21 operated by the visitor, a human body detecting sensor 23 for detecting access of the visitor and a shutter switch 22, which an operator can operate while observing the television monitor in a room.

Now an operation mode thereof will be explained. The microcomputer 133 in the memory processing section 13 is set so as to execute at least either one of a first mode, in which a video signal of one frame is recorded in the video memory 131, every time an operation signal is inputted from the chime switch 21 in the information inputting section 2, and a second mode according to the invention, in which a video signal of one frame is recorded in the video memory 131, unless an operation signal is inputted from the chime switch 21 in a predetermined period of time, after a detection signal has been inputted from the human body detecting sensor 23.

For example, when the human body detecting sensor 23 outputs a detection signal due to the fact that the visitor approaches the neighborhood of the entrance of the building, the microcomputer 133 begins a timer operation at receiving this detection signal. When the visitor pushes the chime in the predetermined period of time thereafter, an operation signal is inputted from the chime switch 21 to the microcomputer 133. When the microcomputer 133 receives the operation signal, it controls the image processing section 12, reads-in video data of one frame from the image processing section 12 into the VRAM 134, and further records them in the video memory 131 together with the data on the date and time generated by the calendar clock 132. That is, it executes the first mode.

In case where the visitor does not push the chime in the predetermined period of time after start of the timer operation, the microcomputer 133 regards the visitor as doubtful and controls the image processing section 12 so as to read-in video data of one frame from the image processing section 12 into the VRAM 134 and to store them in the video memory 131 together with the data on the date and time generated by the calendar clock 132. That is, it executes the second mode according to the invention.

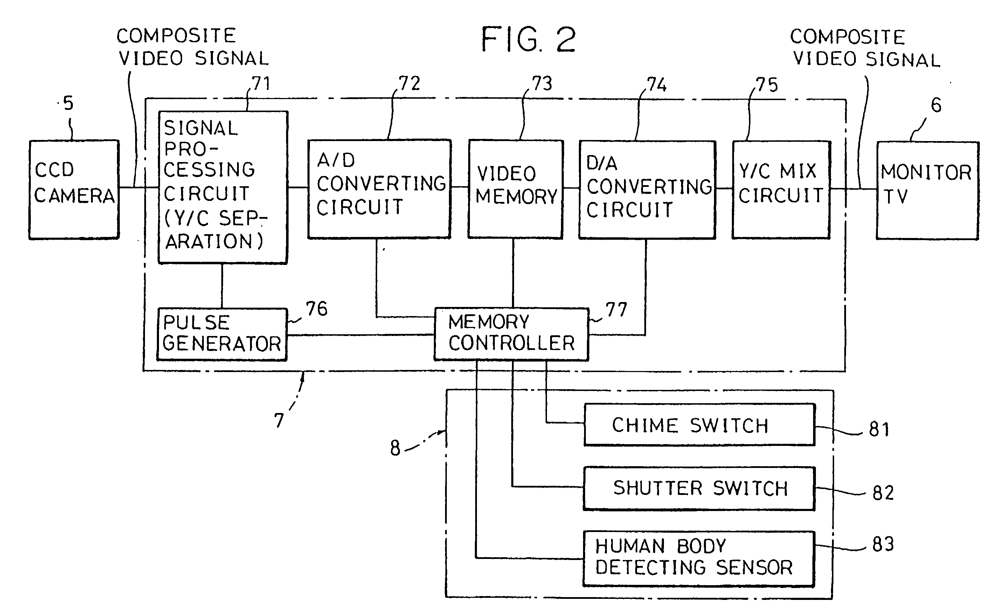

If an RS232C interface board is added to a door camera unit 1 indicated in the above mode of realization, it is possible to transmit video data to a near personal computer 3, a remote personal computer 4, etc. Further, as indicated in Fig. 2, a memory processing section 7 may be connected additionally between an already existing CCD camera 5 and a monitor television 6 so that images are recorded, depending on information signals inputted from an information inputting section 8. In this case, the memory processing section 7 is composed of a signal processing circuit 71, an A/D converting circuit 72, a video memory 73, a D/A converting circuit 74, a Y/C Mix circuit 75, a pulse generator 76 and a memory controller 77. On the other hand, the information inputting section 8 is composed of a chime switch 81, a shutter switch 82 and a human body detecting sensor 83.

## Claims

1. A door camera unit, whose imaging direction is directed to a neighborhood of an entrance of a building, comprising:
a video memory (131);
an information inputting section (2) connected with said door camera unit, which outputs information signals for judging whether video images should be recorded or not; and
means for recording a video image (13), every time an information signal inputted from said information inputting section to said door camera unit meets video recording execution conditions,
**characterized in that**
said information inputting section (2) includes a chime switch (21) operated by a visitor and a human body detecting sensor (83) detecting access of said visitor and video signal is recorded in said video memory (131), unless an operation signal is inputted from said chime switch in a predetermined period of time after a detection signal has been inputted from said human body detecting sensor.

## Patentansprüche

1. Türkameraeinheit, deren Abbildungsrichtung in die Nachbarschaft eines Eingangs zu einem Gebäude weist, aufweisend:
einen Bildspeicher (131);
einen mit der Türkameraeinheit verbundenen Informations-Eingabe-Abschnitt (2), der Informationssignale ausgibt, die der Beurteilung, ob Bilder aufgezeichnet werden sollen oder nicht, dienen; und
Mittel zur Aufzeichnung von Bildern (13), jederzeit wenn ein Informationssignal, das von dem Informations-Eingabe-Abschnitt (2) in die Türkameraeinheit eingebracht wurde, die Bedingungen zur Durchführung der Bildaufzeichnung erfüllt,
**dadurch gekennzeichnet, dass**
der Informations-Eingabe-Abschnitt (2) einen durch einen Besucher betätigbaren Klingelschalter (21) und einen Sensor zur Erfassung eines menschlichen Körpers (23), der den Zugang eines Besuchers erfasst, aufweist, und das Bildsignal in dem Bildspeicher (131) aufgezeichnet wird, wenn nicht innerhalb einer vorbestimmten Zeit nach einem Erfassungssignal, das von dem Sensor zur Erfassung eines menschlichen Körpers eingebracht wird, ein Operationssignal von dem Klingelschalter eingebracht wird.

## Revendications

1. Caméra pour porte, dont la direction de visualisation est orientée sur le voisinage de l'entrée d'un bâtiment, comprenant :
une mémoire vidéo (131) ;
une section (2) d'introduction d'informations connectée avec ladite caméra pour porte, laquelle délivre des signaux d'informations de sortie servant à décider si des images vidéo doivent ou non être enregistrées ; et
un moyen permettant d'enregistrer une image vidéo (13), à chaque fois qu'un signal d'informations introduit depuis ladite section d'introduction d'informations dans ladite caméra pour porte satisfait des conditions d'exécution d'enregistrement vidéo,
**caractérisée en ce que** :
ladite section (2) d'introduction d'informations comporte un commutateur (21) d'indicateur musical actionné par le visiteur et un capteur (83) de détection de corps humain détectant l'accès dudit visiteur, et un signal vidéo est enregistré par ladite mémoire vidéo (131), à moins qu'un signal d'actionnement ne soit introduit depuis ledit commutateur d'indicatif musical dans un laps de temps prédéterminé après que le signal de détection a été introduit en provenance du capteur de détection de corps humain.
